**Europäisches Patentamt**

**European Patent Office**

**Office européen des brevets**

(19)

(11) Veröffentlichungsnummer : **0 368 836 B1**

(12) # EUROPÄISCHE PATENTSCHRIFT

(45) Veröffentlichungstag der Patentschrift :
**27.12.91 Patentblatt 91/52**

(51) Int. Cl.$^5$ : **B60G 3/10, B60G 3/16,
B60G 11/18**

(21) Anmeldenummer : **89890276.2**

(22) Anmeldetag : **23.10.89**

(54) **Radaufhängung für Fahrzeuge.**

(30) Priorität : **11.11.88 AT 2766/88**

(43) Veröffentlichungstag der Anmeldung :
**16.05.90 Patentblatt 90/20**

(45) Bekanntmachung des Hinweises auf die
Patenterteilung :
**27.12.91 Patentblatt 91/52**

(84) Benannte Vertragsstaaten :
**DE FR GB IT**

(56) Entgegenhaltungen :
**EP-A- 0 165 214**

(56) Entgegenhaltungen :
**DE-C- 852 043**
**DE-C- 1 024 814**
**US-A- 2 635 894**
**Prof. Dipl-Ing. Jörnsen Reimpell,
"Fahrwerktechnik 1", 5. Auflage 1982, Vo-
gel-Verlag, Würzburg**

(73) Patentinhaber : **STEYR-DAIMLER-PUCH
AKTIENGESELLSCHAFT
Franz-Josefs-Kai 51
A-1010 Wien (AT)**

(72) Erfinder : **Weber, Georg
Liebenauer Hauptstrasse 302/A/62
A-8041 Graz (AT)**

EP 0 368 836 B1

## Beschreibung

Die Erfindung bezieht sich auf eine Radaufhängung für Fahrzeuge gemäß dem Oberbegriff des Anspruchs 1.

Bei einer bekannten Radaufhängung (DE-A-3148388) sind die Lenker der beiden Räder einer Achse als sogenannte Längslenker ausgeführt und durch das Torsionselement miteinander verbunden, d.h. es bilden beide Lenker mit dem quer zur Fahrtrichtung liegenden Torsionselement ein einziges plattenförmiges Stück mit Rechteckquerschnitt, wobei aber der als Torsionselement dienende Teil dieses Stückes in Fahrzeugmitte starr und unverformbar am Fahrgestell od.dgl. befestigt ist, so daß sich funktionsmäßig für jeden Lenker ein bis zur Fahrzeugmitte reichendes Torsionselement ergibt. Durch die Plattenform sind die Lenker der beiden Räder vergleichsweise biegeweich und müssen durch einen quer zur Fahrtrichtung verlaufenden Träger verbunden und versteift werden, der selbstverständlich den technischen Aufwand und das Gewicht erhöht. Ein weiterer Nachteil ist darin zu erblicken, daß die Länge des für jeden Einzellenker wirksamen Abschnittes des Torsionselementes begrenzt ist, da dieser Abschnitt ja auf jeden Fall nur bis zur Befestigungsstelle des Torsionselementes am Fahrgestell od.dgl. in Fahrzeugmitte reichen kann. Schließlich ist die bekannte Ausbildung auf Längslenker beschränkt und es sind die aus einem Lenker und dem Torsionselement bestehende Bauteile nicht in beliebiger räumlicher Lage anzuordnen.

Es ist zwar auch schon bekannt, jedem Rad einer Achse einen eigenen aus einem Lenker und einem Torsionselement bestehenden Bauteil zuzuordnen (AT-B-375601), wobei es sich aber um eine mehrteilige Konstruktion handelt. Der als Längslenker dienende Lenker zur Radführung ist in einer mit dem Fahrgestell od.dgl. fest verbundenen Lagerhülse gelagert, die dem Lagerzapfen des Längslenkers zur Aufnahme der Radkräfte zwei voneinander mit Abstand angeordnete Lagerstellen bietet. Das stabförmige Torsionselement greift in den Lagerzapfen des Längslenkers ein und ist mit diesem verzahnt, wogegen das radferne Ende des Torsionselementes in einem am Fahrgestell od.dgl. drehfest abgestützten Gegenlenker fixiert ist. Es ergibt sich also eine vergleichsweise komplizierte Bauweise mit doppelter Lagerung des Lenkers bzw. eines Lagerzapfens in der Lagerhülse und eigenen Verbindungsmitteln zwischen Lenker und Torsionselement, wozu noch kommt, daß die Abstützung des Lenkers gegen die Radkräfte gewisse Schwierigkeiten bereitet, weil die beiden Lager in der Lagerhülse eines aus konstruktiven Gründen vergleichsweise geringen Abstand voneinander aufweisen müssen. Eine Radaufhängung dieser Art entspricht dem Oberbegriff des Anspruchs 1.

Schließlich ist es bekannt, Längslenker und querverlaufende Torsionselemente einstückig auszuführen (z.B. DE-A-3641505), jedoch handelt es sich hiebei lediglich um Stabilisatoren, bei denen für jedes Rad eine eigene den technischen Aufwand wesentlich erhöhende Radfeder erforderlich ist.

Somit liegt der Erfindung die Aufgabe zugrunde, alle diese Mängel zu beseitigen und eine Radaufhängung der eingangs geschilderten Art zu schaffen, die einen wesentlich verringerten Herstellungsaufwand und dementsprechend verringerte Kosten sowie eine Gewichtseinsparung gewährleistet und vor allem auch eine größere Freizügigkeit bei der Auslegung der Federsteifigkeit und der Kinematik ermöglicht.

Die Erfindung löst die gestellte Aufgabe durch, die Merkmale des kennzeichnenden Teils des Anspruchs 1.

Das für jedes Rad vorgesehene Winkelstück bildet einen einfachen Bauteil, der sowohl die Aufgabe der Radführung als auch jene der Federung erfüllt. Ein solches Winkelstück kann in beliebiger räumlicher Lage angeordnet werden, es ist also die erfindungsgemäße Ausbildung nicht auf Längslenker beschränkt, sondern kann ebenso bei Quer- oder Schräglenkerausführung angewendet werden. Die Länge des Torsionsabschnittes ist nicht beschränkt. Es kann somit die Federsteifigkeit den jeweiligen Verhältnissen entsprechend angepaßt werden. Zusätzliche Verbindungselemente zwischen den Lenkern einer Achse sind nicht erforderlich, wobei durch das Querschnittsprofil einerseits und die Form der beiden Abschnitte des Winkelstückes anderseits die notwendige Widerstandsfähigkeit gegen die auftretenden Radkräfte und zugleich die erforderlichen Torsionsfedereigenschaften erreichbar sind.

In der Zeichnung ist der Erfindungsgegenstand in mehreren Ausführungsbeispielen dargestellt, und zwar zeigen

Fig. 1    einen erfindungsgemäßen Bauteil im Schaubild,
Fig. 2    einen zugehörigen Querschnitt nach der Linie II-II der Fig.1,
Fig. 3    eine Radaufhängung beider Räder einer Achse im vereinfachten Schaubild,
Fig. 4    das bei dieser Radaufhängung verwendete Schwenklager im Axialschnitt und
Fig. 5    die drehfeste Halterung des Bauteils in gleicher Darstellungsweise,
Fig. 6    das schaubildliche Schema der Aufhängung einer angetriebenen Starrachse,
Fig. 7    eine angetriebene Schräglenkerachse in gleicher Darstellungsweise,
Fig. 8    die Aufhängung einer gelenkten Vorderachse mit Doppelquerlenker und

Fig. 9    eine Ausführung mit Federbeinen ebenfalls in vereinfachter schaubildlicher Darstellung.

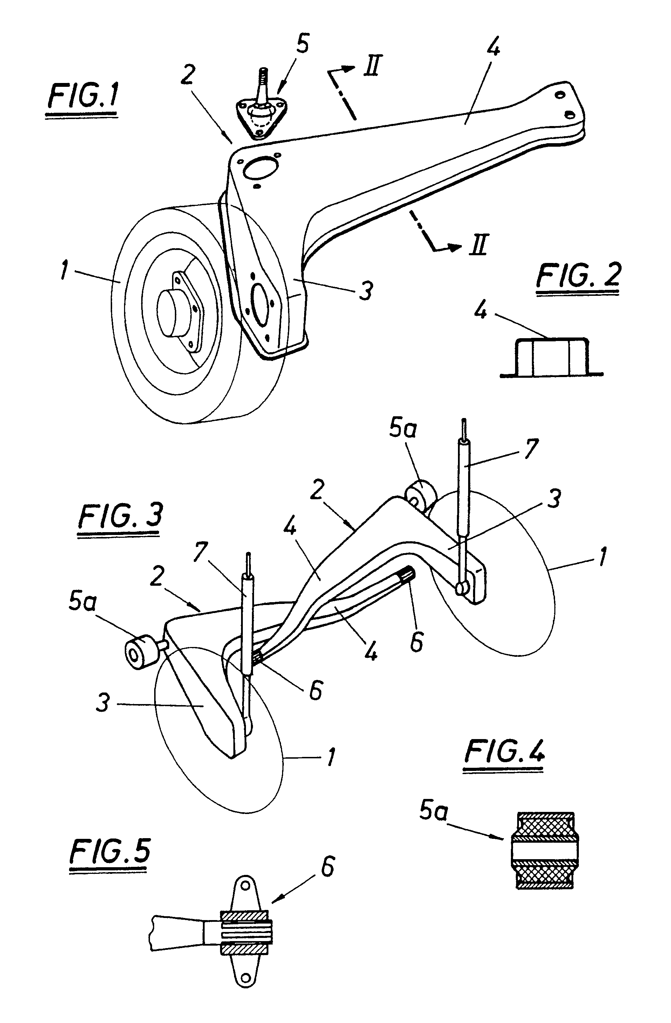

Gemäß Fig. 1 ist zur Aufhängung eines Fahrzeugrades 1 ein Bauteil 2 vorgesehen, der einen Längslenkerabschnitt 3 und einen quer zu diesem verlaufenden Torsionsabschnitt 4 vereint. Dieser Bauteil 2 ist als Preßteil oder als spezieller torsionsweicher jedoch biegesteifer Hohl-Spritzteil, gegebenenfalls aus Kunststoff ausgebildet und wird im Scheitelbereich durch ein als Kugelgelenk ausgebildetes Schwenklager 5 gehalten, wogegen das radferne Ende des Torsionsabschnittes 4 am nicht dargestellten Fahrgestell des Fahrzeuges undrehbar befestigt ist.

Bei der Radaufhängung nach Fig. 3 handelt es sich um eine Schräglenkerausführung, d.h. die Lenkerabschnitte 3 der Bauteile 2 besitzen jeweils eine vom Schwenklager 5a und der drehfesten Halterung 6 gebildete Schwenkachse, die schräg zur Fahrtrichtung verläuft. Mit 7 sind die Stoßdämpfer für die lediglich durch einen Kreis angedeuteten Räder 1 bezeichnet, gesonderte Radfedern sind nicht erforderlich, weil die Torsionsabschnitte 4 die Federungsaufgabe allein übernehmen. An Stelle von Kugelgelenken 5 als Schwenklager sind hier Gummimetallelemente 5a vorgesehen.

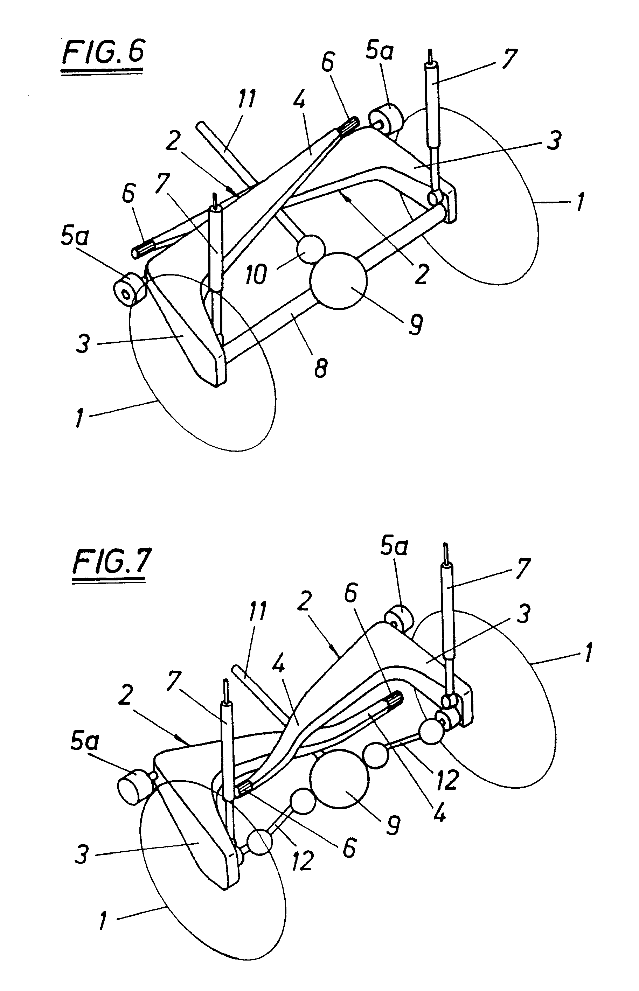

Die erfindungsgemäße Radaufhängung ist auch für eine angetriebene Starrachse 8 geeignet, wie dies Fig. 6 zeigt. Dabei sind mit 9 das Achsausgleichgetriebe und mit 10 das anschließende Gelenk der Kardanwelle 11 bezeichnet. Eine Ausführung mit in Schräglenkerbauart und gelenkig unterteilter Hinterachse ist in Fig. 7 dargestellt, wobei vom Ausgleichgetriebe 9 Antriebswellen 12 über entsprechende Kardangelenke zu den beiden Rädern 1 führen.

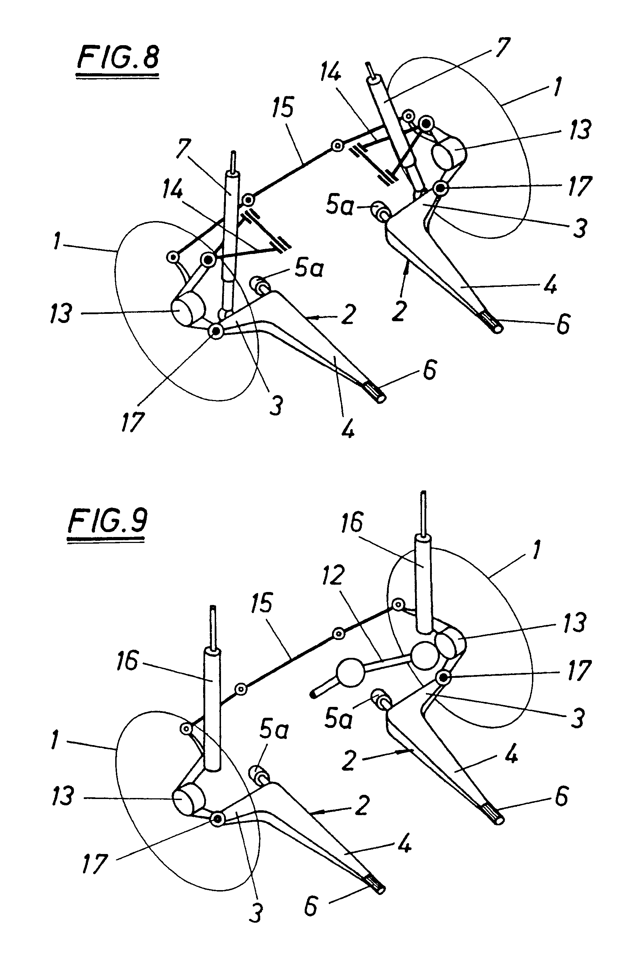

Nach Fig. 8 sind die Bauteile 2 so angeordnet, daß ihre Lenkerabschnitte 3 quer zur Fahrtrichtung und damit die Schwenkachsen in Fahrtrichtung liegen. Es handelt sich also um eine Querlenkerausbildung, wobei den Radträgern 13 noch obere Querlenker 14 zugeordnet sind. Mit 15 ist die Spurstange bezeichnet, da es sich hier um gelenkte Räder 1 handelt.

Auch nach Fig. 9 sind die Bauteile 2 als in sich federnde Querlenker ausgebildet, wobei aber an Stelle der oberen Querlenker 14 Federbeine 16 zur weiteren Radführung dienen. Es kann sich dabei auch um angetriebene Räder handeln, wie dies durch die Antriebswelle 12 angedeutet ist. In beiden Fällen greift der Lenkerabschnitt 3 des Bauteils 2 über ein Kugelgelenk 17 am Radträger 13 an.

## Patentansprüche

1. Radaufhängung für Fahrzeuge mit einem Lenker (3) zur Radführung, der gegen die Kraft eines quer zu ihm verlaufenden Torsionsfederelementes (4) schwenkbar ist, wobei die Federung ausschließlich durch das Torsionsfederlement (4) erfolgt und wobei jedem Rad (1) einer Achse ein eigener aus dem Torsionselement (4) und nur einem Lenker (3) bestehender Bauteil zugeordnet ist und im Scheitelbereich dieses Bauteils (2) ein Schwenklager (5) vorgesehen ist, das mit einer drehfesten Halterung des Torsionselementes die Schwenkachse des Bauteils (2) bildet, dadurch gekennzeichnet, daß der Lenker (3) und das Torsionselement (4) zu einem einstückigen Bauteil (2) vereint sind und daß dieser Bauteil ein Winkelstück (2) mit offenem Hohlprofil bildet, das sich von seinem Scheitelbereich aus sowohl in seinem Lenkerabschnitt (3) als auch in seinem Torsionsabschnitt (4) stetig verjüngt.

2. Radaufhängung nach Anspruch 1, dadurch gekennzeichnet, daß das Torsionselement (4) des Bauteiles (2) sich im Wesentlichen quer zur Fahrtrichtung über die Fahrzeuglängsachse hinweg erstreckt und gekrümmt ist.

3. Radaufhängung nach Anspruch 2, dadurch gekennzeichnet, daß das Torsionselement (4) des Bauteiles (2) in einem Nutenprofil (6) endet.

4. Radaufhängung nach Anspruch 2, dadurch gekennzeichnet, daß die vom Schwenklager (5a) und der drehfesten Halterung gebildete Schwenkachse schräg zur Fahrzeuglängsachse angeordnet ist, sodaß das Bauteil (2) einen Schräglenker bildet.

5. Radaufhängung nach Anspruch 1, dadurch gekennzeichnet, daß der Bauteil (2) als torsionsweicher, jedoch biegesteifer Hohlteil ausgebildet ist.

6. Radaufhängung nach Anspruch 5, dadurch gekennzeichnet, daß der Bauteil (2) ein dünnwandiger Preßteil ist.

7. Radaufhängung nach Anspruch 5, dadurch gekennzeichnet, daß der Bauteil (2) ein Spritzteil ist.

8. Radaufhängung nach Anspruch 7, dadurch gekennzeichnet, daß der Bauteil (2) aus Kunststoff besteht.

9. Radaufhängung nach Anspruch 1, dadurch gekennzeichnet, daß der Bauteil (2) mit seinen Lenkerabschnitten (3) quer zur Fahrzeuglängsachse angeordnet und daß ein Radträger 13 über ein Kugelgelenk 17 mit dem Lenkerabschnitt (3) und mit einem weiteren Führungsmittel (14, 16) verbunden ist.

## Claims

1. A wheel suspension for vehicles, comprising a wheel control arm (3), which is pivotally movable against the force of a torsion spring element (4), which extends transversely to said link, wherein the resilience is provided only by the torsion spring element (4), a separate component consisting of the torsion element (4) and only one control arm (3) is associated with each wheel (1) and a pivotal mounting (5) is provided adjacent to the apex of said component and together with a holder for non-rotatably mounting the torsion element constitutes the pivotal axis of the component (2) characterized in that the control arm (3) and the torsion element (4) are united in an integral component (2), which consists of an angle member (2), which has an open hollow profile and is continuously tapered from its apex portion in its control arm portion (3) and its torsion portion (4).

2. A wheel suspension according to claim 1, characterized in that the torsion element (4) of the component (2) extends substantially transverse to the direction of travel across the longitudinal axis of the vehicle and is curved.

3. A wheel suspension according to claim 2, characterized in that the torsion element (4) of the component (2) terminates in a grooved profile (6).

4. A wheel suspension according to claim 2, characterized in that the pivotal axis defined by the pivotal mounting (5a) and the non-rotatable holder is oblique to the longitudinal axis of the vehicle so that the component (2) constitutes a semi-trailing control arm.

5. A wheel suspension according to claim 1, characterized in that the component (2) consists of a hollow member, which is torsionally elastic but flexurally stiff.

6. A spring suspension according to claim 5, characterized in that the component (2) is a pressed thin-walled member.

7. A wheel suspension according to claim 5, characterized in that the component (2) is a die casting or injection molding.

8. A wheel suspension according to claim 7, characterized in that the component (2) consists of plastic.

9. A wheel suspension according to claim 1, characterized in that the control arm portions (3) of the component (2) extend transversely to the longitudinal axis of the vehicle and a wheel carrier 13 is connected by a ball joint 17 to the control arm portion (3) and to other control means (14, 16).

## Revendications

1. Suspension de roue pour véhicules automobiles avec un bras oscillant (3) pour le guidage de la roue, qui peut osciller contre la force d'un élément (4) à ressort de torsion s'étendant transversalement à ce bras, dans laquelle la suspension élastique s'effectue exclusivement par l'élément (4) à ressort de torsion, et dans laquelle est associé en propre à chaque roue (1) d'un essieu un ensemble constitutif composé d'un élément (4) à ressort de torsion et d'un seul bras oscillant (3), et dans laquelle est prévu dans la partie haute de cet ensemble constitutif (2) un palier d'oscillation (5) qui forme avec une fixation d'immobilisation contre la rotation de l'élément à ressort de torsion l'axe d'oscillation de l'ensemble constitutif (2), caractérisée en ce que le bras oscillant (3) et l'élément (4) à ressort de torsion sont réunis pour former un ensemble constitutif (2) en une seule pièce, et en ce que cet ensemble constitutif a la configuration d'une équerre (2) à profil creux ouvert qui, à partir de son sommet, va en se rétrécissant de façon continue aussi bien dans son tronçon servant de bras oscillant (3) que dans son tronçon servant d'élément de torsion (4).

2. Suspension de roue selon la revendication 1, caractérisée en ce que l'élément de torsion (4) de l'ensemble constitutif (2) s'étend transversalement au sens de la marche substantiellement au-delà de l'axe longitudinal du véhicule et il est coudé.

3. Suspension de roue selon la revendication 2, caractérisée en ce que l'élément de torsion (4) de l'ensemble constitutif (2) se termine par un profil cannelé (6).

4. Suspension de roue selon la revendication 2, caractérisée en ce que l'axe d'oscillation formé par le palier d'oscillation (5a) et la fixation d'immobilisation contre la torsion est disposé obliquement par rapport à l'axe longitudinal du véhicule automobile de sorte que l'ensemble constitutif (2) forme un bras oscillant incliné.

5. Suspension de roue selon la revendication 1, caractérisée en ce que l'ensemble constitutif (2) est réalisé comme une pièce creuse souple à la torsion mais rigide à la flexion.

6. Suspension de roue selon la revendication 5, caractérisée en ce que l'ensemble constitutif (2) est une pièce à paroi mince mise en forme par compression.

7. Suspension de roue selon la revendication 5, caractérisée en ce que l'ensemble constitutif (2) est une pièce moulée par injection.

8. Suspension de roue selon la revendication 7, caractérisée en ce que l'ensemble constitutif (2) est en matière synthétique.

9. Suspension de roue selon la revendication 1, caractérisée en ce que l'ensemble constitutif (2) est disposé avec son tronçon (3) servant de bras oscillant mis transversalement à l'axe longitudinal du véhicule automobile et en ce qu'un porte-roue (13) est relié par un joint à rotule (17) au tronçon (3) servant de bras oscillant (3) et à un moyen de guidage (14, 16) supplémentaire.

FIG.1

FIG.2

FIG.3

FIG.4

FIG.5

FIG.6

FIG.7

## FIG.8

## FIG.9